(19) Europäisches Patentamt
European Patent Office
Office européen des brevets

(11) **EP 3 908 424 B1**

(12) **EUROPÄISCHE PATENTSCHRIFT**

(45) Veröffentlichungstag und Bekanntmachung des Hinweises auf die Patenterteilung:
**26.04.2023  Patentblatt 2023/17**

(21) Anmeldenummer: **19711255.0**

(22) Anmeldetag: **01.03.2019**

(51) Internationale Patentklassifikation (IPC):
**B23Q 3/155** (2006.01)    **G05B 19/4093** (2006.01)

(52) Gemeinsame Patentklassifikation (CPC):
**G05B 19/40938;** B23Q 3/15503; Y02P 90/02

(86) Internationale Anmeldenummer:
**PCT/EP2019/055123**

(87) Internationale Veröffentlichungsnummer:
**WO 2020/177838 (10.09.2020 Gazette 2020/37)**

(54) **VERFAHREN ZUR RECHNERGESTÜTZTEN OPTIMIERUNG EINER BELEGUNG VON MAGAZINPLÄTZEN MIT WERKZEUGEN**

METHOD FOR OPTIMIZING THE OCCUPANCY OF MAGAZINE SPACES BY TOOLS IN A COMPUTER-SUPPORTED MANNER

PROCÉDÉ D'OPTIMISATION, ASSISTÉE PAR ORDINATEUR, D'UNE OCCUPATION D'EMPLACEMENTS DE MAGASIN PAR DES OUTILS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.11.2021  Patentblatt 2021/46**

(73) Patentinhaber: **Siemens Aktiengesellschaft 80333 München (DE)**

(72) Erfinder:
• **BAIER, Georg 81241 München (DE)**
• **HUPP, Lena 81371 München (DE)**
• **ROYER, Christian 85521 Ottobrunn (DE)**
• **BECHER, Silvio 81827 München (DE)**

(74) Vertreter: **Siemens Patent Attorneys Postfach 22 16 34 80506 München (DE)**

(56) Entgegenhaltungen:
**US-A1- 2010 204 028    US-A1- 2014 371 042 US-A1- 2018 088 562**

• **M. MENDES ET AL: "A mixed-integer linear programming model for part mix, tool allocation, and process plan selection in CNC machining centres", INTERNATIONAL JOURNAL OF MACHINE TOOLS AND MANUFACTURE, Bd. 43, Nr. 11, 1. September 2003 (2003-09-01), Seiten 1179-1184, XP055283617, AMSTERDAM, NL ISSN: 0890-6955, DOI: 10.1016/S0890-6955(03)00052-X**

**Beschreibung**

Die Erfindung betrifft ein Verfahren und eine Vorrichtung zur rechnergestützten Optimierung einer Belegung von Magazinplätzen mit Werkzeugen innerhalb mindestens eines Werkzeugmagazins für eine Werkzeugmaschine.

Eine Werkzeugmaschine ist eine automatisierte Fertigungseinrichtung mit der eine vorgegebene Form an einem Werkstück mittels eines oder mehrerer Werkzeuge erzeugt wird. Mehrere Werkzeuge können einem Werkzeugtyp z.B. Fräsen zugeordnet sein. Ein anderer Werkzeugtyp kann z.B. Bohren sein. Eine Werkzeugmaschine besitzt eine Werkzeugspindel, in der sich das bearbeitende Werkzeug, auch Spindelwerkzeug genannt, bei der Bearbeitung befindet.

Die Werkzeuge, die von der Werkzeugmaschine zur Bearbeitung eines Werkstücks verwendet werden können, sind in einem Werkzeugmagazin abgelegt. Davon gibt es verschiedene Arten. Eine sehr häufig verwendete Form sind Kettenmagazine, die z.B. in der Automobilindustrie zum Einsatz kommen.

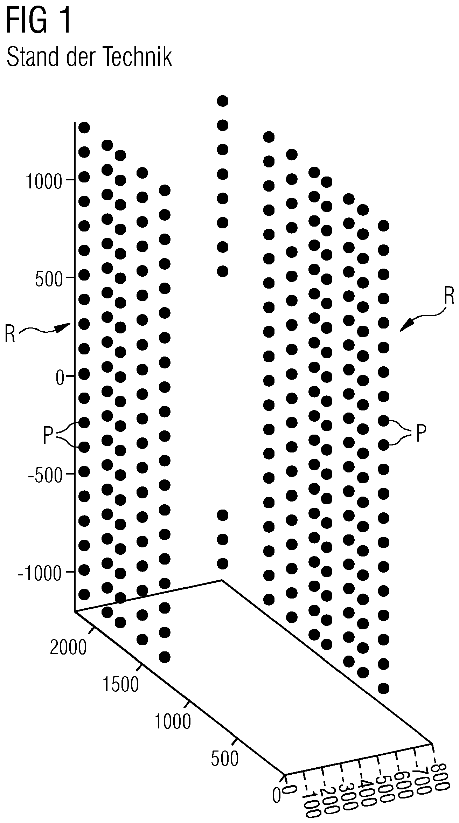

Eine weitere Magazinart sind Regalmagazine R, wie es beispielsweise in Figur 1 angedeutet ist, in denen sehr viele verschiedene Werkzeuge untergebracht werden können (bis zu 500 Werkzeuge oder sogar eventuell noch mehr). Die Werkzeuge sind darin auf festen Magazinplätzen P abgelegt. Ein solches Magazin kann aus einer Hauptseite und einer gegenüberliegenden Gegenseite bestehen.

Aus US 2010/0204028 A1 ist ein System zum Austauschen und Einfügen oder Platzieren von Werkzeugen in einer Werkzeugmaschine bekannt, wobei das Werkzeugmagazin so in einer Bogenform geformt ist, dass Werkzeuge radial nach innen bzw. nach außen entnommen werden können.

Aus US 2018/088562 A1 ist ein Verfahren zur Steuerung einer Werkzeugmaschine mit einem ersten und einem zweiten Werkzeugmagazin bekannt, wobei ein Werkzeug zur Bearbeitung eines Werkstücks vom ersten Werkzeugmagazin aufgenommen werden kann und ein Werkzeug aus dem zweiten Werkzeugmagazin in das erste Werkzeugmagazin übernommen werden kann, und wobei eines der Werkzeuge ein Mehrfachwerkzeug umfasst.

Aus US 2014/371042 A1 ist ein ringförmiges Werkzeugmagazin bekannt, wobei ein Spindelturm vertikal rotierbar montiert ist.

Aus M. Mendes ET AL: "A mixed-integer linear programming model for part mix, tool allocation,and process plan selection in CNC machining centres", International Journal of Machine Tools and Manufacture, Bd. 43, Nr. 11, 1. September 2003 (2003-09-01), Seiten 1179-1184, XP055283617,AMSTERDAM,NL ISSN: 0890-6955, DOI: 10.1016/S0890-6955(03)00052-X ist ein mixed integer lineares Programm Modell bekannt, das eine simultane Teile-Mix-, Werkzeugzuteilungs- und Prozessplanung für eine CNC Maschine ermöglicht.

Das oben erwähnte Regalmagazin besitzt eine Vorrichtung insbesondere ein Magazingerät, das in der Figur 1 nicht dargestellt ist, mit der ein Werkzeug auf seinem Magazinplatz P abgelegt und geholt werden kann. Diese Magazinart wird vor allem dann verwendet, wenn eine größere Vielfalt von unterschiedlichen Werkstücken, für die eine Vielzahl an unterschiedlichen Werkzeugen benötigt wird, mit einer Werkzeugmaschine produziert werden soll.

Die Bearbeitung eines Werkstücks eines bestimmten Werkstücktyps erfolgt mit einer vorgegebenen Sequenz von Werkzeugen. Ein Werkzeug kann dabei durchaus mehrmals in dieser Sequenz vorkommen. Die Sequenz ist für alle Werkstücke eines Werkstücktyps z.B. Autositz die gleiche. Die Sequenz kann für Werkstücke eines anderen Werkstücktyps eine andere sein.

Während eines Arbeitsschritts der Bearbeitung eines Werkstücks mit einem Werkzeug der Sequenz, dem Spindelwerkzeug, wird im Regalmagazin das "Vorgängerwerkzeug" des vorhergehenden Arbeitsschritts auf seinen Magazinplatz zurückgefahren bzw. zurückgelegt. Anschließend erfolgt eine Leerfahrt zum Magazinplatz des "Nachfolgerwerkzeugs" des nachfolgenden Arbeitsschrittes. Dieses wird dann aufgenommen und zu einem Bereitstellungsplatz transportiert. Ist der aktuelle Arbeitsschritt, d.h. die Bearbeitung mit dem aktuellen Spindelwerkzeug beendet, so erfolgt ein Austausch des Werkzeugs in der Spindel (z.B. mit einem Werkzeugwechsler). Falls die Bearbeitung mit dem Spindelwerkzeug beendet ist, aber das Nachfolgerwerkzeug für den folgenden Arbeitsschritt noch nicht bereitsteht, entsteht eine Wartezeit bei der Spindelversorgung. Diese einzelnen Wartezeiten reduzieren die Maschinen-Effizienz und erhöhen die Produktionsdauer. Deshalb sollen diese Wartezeiten vermieden werden.

Die Bearbeitung des Werkstücks erfordert im Allgemeinen die Verwendung vieler verschiedener Werkzeuge. Um trotz einer breiten Vielfalt, an zu produzierenden Werkstücken, eine kontinuierliche Produktion zu ermöglichen verfügen diese Werkzeugmaschinen über große Magazine, in denen die Werkzeuge abgelegt werden.

Trotz der großen Kapazität müssen diesen Magazinen immer wieder Werkzeuge entnommen und neue Werkzeuge hinzugefügt werden. Auf Grund technischer Einschränkungen können Werkzeuge nicht beliebig im Magazin platziert werden, sondern müssen ihrem Platzbedarf, z.B. gemäß ihrem Werkzeugradius und weiteren Anforderungen entsprechend abgelegt werden. Solche Anforderungen können durch ihre Eigenschaft(en) z.B. Gewicht des Werkzeugs oder auch die Werkzeuglänge sein. Dazu sollte die Eigenschaft(en) des Magazinplatzes z.B. maximale Traglast oder auch Randplatz passen. Das Finden einer zulässigen Platzzuordnung für die Werkzeuge ist in vollen, großen Magazinen eine komplexe Aufgabe.

Werkzeuge haben, neben ihrer eigentlichen Werkzeugeigenschaft, weitere Charakteristika. Sie unterscheiden sich z.B. in Größe und Gewicht. Daher haben Regalmagazine unterschiedliche Platztypen um die entsprechenden Werkzeuge aufzunehmen. Weiterhin können in Regalmagazinen auf Grund von Defekten oder baulichen Besonderheiten bestimmte Plätze gesperrt sein. Daher müssen bei der Zuweisung eines Platzes diverse Bedingungen erfüllt werden.

Ein Werkzeug darf gewöhnlich nicht an jeden Magazinplatz gestellt werden, d.h. es gibt für das Werkzeug zulässige Magazinplätze und unzulässige Magazinplätze:

- Der Magazinplatztyp des Werkzeugs und der Magazinplatztyp des Magazins bzw. Regalplatzes müssen kompatibel sein. So dürfen z.B. große Werkzeuge nicht auf Magazinplätze für kleine Werkzeuge gestellt werden und ggf. umgekehrt.
- Werkzeuge dürfen am Rand nicht überragen.
- Auf gesperrten Magazinplätzen dürfen keine Werkzeuge stehen.
- Sind Werkzeuge übergroß, so müssen ein oder eventuell sogar mehrere benachbarte Magazinplätze frei gelassen werden.

Darüber hinaus sind aus Sicht der Produktion nicht alle Plätze im Magazin gleichwertig. Mit anderen Worten es gibt von den zulässigen Magazinplätzen eine Teilmenge von bevorzugten Magazinplätzen. Wird zum Beispiel ein Werkzeug sehr häufig verwendet, so ist es günstig, dieses an einem schnell erreichbaren Magazinplatz abzulegen. Eine zulässige Platzzuordnung soll daher nicht nur alle Werkzeuge im Magazin unterbringen, sondern auch bestimmte ausgezeichnete Werkzeuge an vorgegebenen bzw. vorgebbaren und/oder bevorzugten Magazinplätzen belassen.

Sollen in einem sehr vollen Magazin mit 500 Plätzen 10 Werkzeuge entnommen und 15 neue Werkzeug hinzugefügt werden, so ist es nicht wünschenswert, wenn dazu fast alle Werkzeuge einen neuen Platz zugewiesen bekommen. Aus Sicht des Maschinenführers ist es vorteilhaft, wenn möglichst viele Werkzeuge an ihrem bisherigen Platz verbleiben.

Es ist Aufgabe der vorliegenden Erfindung, eine zulässige Magazinplatzbelegung der Werkzeuge in Regalmagazinen unter Minimierung der Anzahl der im Werkzeugmagazin umzuplatzierenden Werkzeuge zu finden.

Diese Aufgabe wird durch die unabhängigen Ansprüche gelöst. Vorteilhafte Weiterbildungen sind Gegenstand der abhängigen Ansprüche.

Die Erfindung beansprucht ein Verfahren zur rechnergestützten Optimierung einer Belegung von Magazinplätzen mit Werkzeugen innerhalb mindestens eines Werkzeugmagazins für eine Werkzeugmaschine aufweisend folgende Schritte:

a) Erfassen einer Menge von Magazinplätzen in mindestens einem Werkzeugmagazin,

b) Erfassen einer ersten Menge von Werkzeugen, die zumindest einen Magazinplatz belegen, sowie derer belegte Magazinplätze,

c) Erfassen einer zweiten Menge von Werkzeugen, die zusätzlich in das zumindest eine Werkzeugmagazin aufzunehmen sind,

d) Erfassen eines Platzbedarfs und gegebenenfalls zumindest einer weiteren Eigenschaft für jedes Werkzeug,

e) Erfassen jeweils einer Menge von zulässigen Magazinplätzen für jedes Werkzeug, wobei ein zulässiger Magazinplatz vom Platzbedarf und/oder zumindest einer weiteren Eigenschaft des Werkzeugs und/oder einer Eigenschaft des Magazinplatzes abhängt,

f) Erfassen einer Menge von zulässigen Magazinplatzpaaren, wobei ein erstes Werkzeug auf einen ersten für dieses Werkzeug zulässigen Magazinplatz des Magazinplatzpaares, und ein zweites Werkzeug auf den zweiten für dieses Werkzeug zulässigen Magazinplatz des Magazinplatzpaares kollisionsfrei bezüglich ihres jeweiligen Platzbedarfs platziert werden können und Erfassen der Größe des freien Zwischenraums zwischen dem ersten bereits platzierten Werkzeug und dem zweiten bereits platzierten Werkzeug, dadurch gekennzeichnet, dass

g) Optimierung der Belegung der Magazinplätze mit Werkzeugen nach Aufnahme zumindest eines Werkzeuges aus der zweiten Menge, so dass die Anzahl der durch die Aufnahme des genannten Werkzeuges notwendigen Umplatzierungen der Werkzeuge aus der ersten Menge minimiert wird, wobei die notwendigen Umplatzierungen der Werkzeuge so kompakt erfolgt, dass die Summe der Größen der freien Zwischenräume zweier benachbart platzierter Werkzeuge minimiert wird und das Magazinplatzpaar dieser benachbart platzierter Werkzeuge aus der Menge der für dieses Werkzeugpaar zulässigen Magazinplatzpaare ist. Die genannte Optimierung wird mittels gemischt ganzzahlig linearer Optimierung durchgeführt, die jeweils in den nachstehenden Ausführungsbeispielen näher erläutert werden.

Neben zulässigen Magazinplätzen gibt es zulässige Magazinplatzpaare. Dabei wird ein erstes Werkzeug auf einen ersten für dieses Werkzeug zulässigen Magazinplatz des Magazinplatzpaares, und ein zweites Werkzeug auf den zweiten für dieses Werkzeug zulässigen Magazinplatz des Magazinplatzpaares kollisionsfrei bezüglich ihres jeweiligen Platzbedarfs platziert. Kollisionsfrei hinsichtlich des Platzbedarfs bedeutet in diesem Zusammenhang, dass ein Werkzeug auf einen zulässigen Magazinplatz transportiert bzw. platziert werden kann, ohne die eingangs genannten Restriktionen für einen zulässigen Magazinplatz zu verletzen.

Ein freier Zwischenraum ist der zwischen den Plätzen liegende nicht von einem Werkzeug oder von einem Teil dessen überdeckte Zwischenraum. Der Zwischenraum kann durch die Größe gemessen werden. Die Größe kann hierbei durch ein Volumen, eine Distanz bzw. Abstand oder einen Durchmesser, eine Fläche etc. wiedergegeben werden. Im Idealfall liegt kein oder nur wenig Zwischenraum zwischen den platzierten Werkzeugen. Zwei benachbarte bzw. benachbart platzierte Werkzeuge können in diesem Kontext so verstanden werden, dass kein anderes Werkzeug dazwischen liegt.

Ein aufgenommenes Werkzeug soll so platziert werden oder sein, dass zwischen diesem Werkzeug und einem auf einem benachbarten Magazinplatz platzierten Werkzeug, ein möglichst geringer Zwischenraum entsteht oder ist.

Insgesamt sollen die Magazinplätze im Magazin möglichst kompakt bzw. dicht belegt werden. Es sollen zwischen den platzierten Werkzeugen möglichst wenige oder keine leeren Magazinplätze dazwischen liegen. Je nach Platzbedarf eines Werkzeugs bzw. je nach Radius/Länge/Breite eines Werkzeugs, kann dieses auf seinem Magazinplatz platziert und dabei benachbarte Magazinplätze ganz oder teilweise überdecken bzw. belegen. Ein Magazinplatz kann ein oder mehrere Halbplätze umfassen Diese können links, rechts oder oben, unten sich befinden. Dies sind Stellen am jeweiligen Magazinplatz, die durch andere Werkzeuge an benachbarten Magazinplätzen überdeckt werden können.

Die Belegung der Magazinplätze mit Werkzeugen kann so erfolgen, dass zwischen den Magazinplätzen zweier benachbarter platzierter Werkzeuge, der oder die dazwischen liegenden Halbplätze belegt sind, d.h. möglichst kein Halbplatz frei ist. "Frei" bedeutet, dass der Magazinplatz nicht belegt bzw. der Halbplatz nicht überdeckt ist.

Der Optimierungsschritt h) kann gegebenenfalls mehrfach wiederholt werden, solange bis alle Werkzeuge der zweiten Menge in das genannte Magazin aufgenommen worden sind.

Somit wird eine zulässige Magazinkonfiguration bei minimaler Anzahl umzuplatzierender Werkzeuge gefunden, die schnell und zuverlässig durchgeführt werden kann.

Eine Weiterbildung der Erfindung sieht vor, dass gemäß der optimierten Belegung bzw. der zulässigen Magazinkonfiguration die Werkzeuge von einem Magazingerät des Werkzeugmagazins aufgenommen und/oder (um)platziert werden.

Eine Teilmenge der Werkzeuge wird aus der ersten Mengen vorgegeben bzw. festgelegt, die jeweils weder durch die Optimierung noch durch die Aufnahme eines Werkzeuges auf einen anderen Magazinplatz umplatziert werden dürfen.

Es kann für eine Teilmenge der Werkzeuge aus der zweiten Menge zusätzlich zulässige Magazinplätze erfasst werden und die Optimierung derart durchgeführt wird, dass diese Werkzeuge auf die jeweils zulässigen erfassten Magazinplätze platziert werden.

Ein weiterer Aspekt der Erfindung sieht eine Steuerungseinrichtung vor, die insbesondere zur Durchführung des Verfahrens nach oben genannter Art und dessen Ausführungsformen ausgebildet ist. Die Steuereinrichtung (nicht in Figur 1 gezeigt) kann ein der Werkzeugmaschine beigeordneter und ggf. abgesetzt angeordneter Rechner oder in die Werkzeugmaschine integriertes Steuerungsmodul sein.

Die Steuerungseinrichtung zur rechnergestützten Optimierung einer Belegung von Magazinplätzen mit Werkzeugen innerhalb mindestens eines Werkzeugmagazins für eine Werkzeugmaschine kann aufweisen:

a) eine erste Erfassungseinheit, die dazu ausgelegt ist, eine Menge von Magazinplätzen in mindestens einem Werkzeugmagazin zu erfassen,
b) eine zweite Erfassungseinheit, die dazu ausgelegt ist, eine erste Menge von Werkzeugen, die zumindest einen Magazinplatz belegen, sowie derer belegte Magazinplätze zu erfassen,
c) eine dritte Erfassungseinheit, die dazu ausgelegt ist, eine zweite Menge von Werkzeugen, die zusätzlich in das zumindest ein Werkzeugmagazin aufzunehmen sind, zu erfassen,
d) eine vierte Erfassungseinheit, die dazu ausgelegt ist, einen Platzbedarf für jedes Werkzeug und gegebenenfalls zumindest einer weiteren Eigenschaft für jedes Werkzeug zu erfassen,
e) eine fünfte Erfassungseinheit, die dazu ausgelegt ist, jeweils eine Menge von zulässigen Magazinplätzen für jedes Werkzeug zu erfassen, wobei ein zulässiger Magazinplatz vom Platzbedarf und/oder zumindest einer weiteren Eigenschaft des Werkzeugs und/oder einer Eigenschaft des Magazinplatzes abhängt,
f) eine sechste Erfassungseinheit, die dazu ausgelegt ist, die Menge von zulässigen Magazinplatzpaaren zu erfassen, wobei ein erstes Werkzeug auf einen ersten für dieses Werkzeug zulässigen Magazinplatz des Magazinplatzpaares und ein zweites Werkzeug auf den zweiten für dieses Werkzeug zulässigen Magazinplatz des Magazinplatzpaares kollisionsfrei bezüglich ihres jeweiligen Platzbedarfs platziert werden können und die Größe des freien Zwischenraums zwischen dem ersten bereits platzierten Werkzeug und dem zweiten bereits platzierten Werkzeug zu erfassen, dadurch gekennzeichnet, dass

g) eine Optimierungseinheit, die dazu ausgelegt ist, die Belegung der Magazinplätze mit Werkzeugen der ersten Menge und zumindest eines aufzunehmenden Werkzeuges aus der zweiten Menge mittels gemischt ganzzahliger linearer Optimierung zu optimieren, so dass die Anzahl der durch die Aufnahme des genannten Werkzeuges notwendigen Umplatzierungen der Werkzeuge aus der ersten Menge minimiert wird, wobei die notwendigen Umplatzierungen und (initialen bzw. neuen) Platzierungen der Werkzeuge aus der zweiten Menge der Werkzeuge so kompakt erfolgt, dass die Summe der Größen der freien Zwischenräume zweier benachbart platzierter Werkzeuge minimiert wird, das Magazinplatzpaar dieser benachbart platzierter Werkzeuge aus der Menge der für dieses Werkzeugpaar zulässigen Magazinplatzpaare ist.

Dabei können die erste, zweite, dritte, vierte, fünfte und sechste Erfassungseinheit in jeder Kombination zu zweit, dritt, viert oder fünft in eine Erfassungseinheit integriert sein.

Die Steuereinrichtung (nicht in Figur 1 gezeigt) kann ein der Werkzeugmaschine beigeordneter und ggf. abgesetzt angeordneter Rechner oder in die Werkzeugmaschine integriertes Steuerungsmodul sein.

Ein weiterer Aspekt der Erfindung ist ein Computerprogramm(-produkt) mit Programmcodemitteln zur Durchführung des Verfahrens nach einem der vorangehenden Verfahrensansprüche, wenn es auf einer Steuerungseinrichtung der oben genannten Art abläuft oder auf einem computerlesbaren Medium gespeichert ist.

Das Computerprogramm bzw. -produkt kann auf einem computerlesbaren Medium gespeichert sein. Das Computerprogramm bzw. - produkt kann in einer üblichen Programmiersprache (z.B. C++, Java) erstellt sein. Die Verarbeitungseinrichtung kann einen marktüblichen Computer oder Server mit entsprechenden Eingabe-, Ausgabe- und Speichermitteln umfassen. Diese Verarbeitungseinrichtung kann in der Steuerungseinrichtung oder in deren Mitteln integriert sein.

Die Steuerungseinrichtung sowie das Computerprogramm(-produkt) können analog zum oben genannten Verfahren weiter- bzw. ausgebildet sein.

Weitere Vorteile, Einzelheiten und Weiterbildungen der Erfindung ergeben sich aus der nachfolgenden Beschreibung von Ausführungsbeispielen in Verbindung mit den Zeichnungen.

Es zeigen:

Figur 1 die eingangs erwähnten Plätze in einem Regalmagazin, wobei die Hauptseite rechts und die Gegenseite links angeordnet sind,

Figur 2A und 4A ein vereinfachtes Beispiel für ein Regalmagazin mit Magazinplätzen,

Figur 2B ein Beispiels für zulässige und unzulässige Platzzuordnungen,

Figur 3A und 3B eine Ausgangsbelegung und eine zulässige Belegung nach Hinzufügen zweier Werkzeuge,

Figur 4B und 4C Beispielmagazine mit Teilplätzen.

Ein Spezialfall von Optimierungsmethoden ist die lineare Optimierung. Sie befasst sich mit der Optimierung linearer Zielfunktionen über einer Menge, die durch lineare Gleichungen und Ungleichungen eingeschränkt ist. Sie ist Grundlage der Lösungsverfahren der (gemischt-) ganzzahligen linearen Optimierung. Ein sogenannter Solver (Löser) ist eine Sammelbezeichnung für spezielle mathematische Computerprogramme, die mathematische Probleme numerisch lösen können. Im Zusammenhang mit MILP (mixed integer linear programming bzw. gemischt ganzzahlige lineare Programmierung) können für IP-Programme (ganzzahlige Optimierungsmodelle) Standardsolver wie z.B. CPLEX, Scip, Gurobi, Xpress verwendet werden.

Im Folgenden wird ein Beispiel beschrieben, in dem mittels eines MILP-Modell (Mixed Integer Linear Programming) eine rechnergestützte Optimierung einer Belegung von Magazinplätzen mit Werkzeugen innerhalb mindestens eines Werkzeugmagazins für eine Werkzeugmaschine durchgeführt wird. Dieses Vorgehen kann unabhängig von der oben beschriebenen Heuristik und Umsortierverfahren durchgeführt werden.

Da die Entnahme von Werkzeugen nur zu zusätzlichen freien Magazinplätzen führt und darüber hinaus keinen weiteren Einfluss bzw. Beschränkungen für die gesuchte optimierte Belegung der Magazinplätze hat, ist im Beispiel die Entnahme der Werkzeuge schon abgeschlossen und es werden nur noch Werkzeuge zum Magazin hinzugefügt.

Die Optimierungsberechnung muss daher durch eine Steuerungsvorrichtung so schnell erfolgen, dass es als Teil eines interaktiven Vorgehens verwendet werden kann, bei dem die Aufnahme der Werkzeuge sukzessive zu einem zulässigem Ergebnisführt.

Als Eingangsparameter werden erfasst:
Die Menge der im Magazin befindlichen Werkzeuge mit ihren belegten Magazinplätzen.

Die Menge der ins Magazin einzufügenden bzw. aufzunehmenden Werkzeuge.

Für jedes im Magazin befindliche oder hinzuzufügende Werkzeug seinen Platzbedarf,

die für dieses Werkzeug zulässigen Magazinplätze,

die für dieses Werkzeug bevorzugten Magazinplätze.
Die Menge der im Magazin verfügbaren Magazinplätze.

Ergebnis ist eine optimierte Belegung der Magazinplätze. Dabei können folgende Werte ausgegeben werden: Ja-Nein-Aussage (1-0-Wert), ob es eine zulässige Magazinplatzzuordnung unter den gegebenen Anforderungen gibt.
Im Fall einer Ja-Aussage zur Zulässigkeit werden darüber hinaus ausgegeben:

Für jedes einzufügende Werkzeug sein zugewiesener Magazinplatz.
Für jedes im Magazin befindliche und umzuplatzierende Werkzeug sein neuer zugewiesener Magazinplatz.

Die Komplexität bei der Befüllung des Regalmagazins entsteht durch die einzuhaltenden Platzrestriktionen für die Werkzeuge. Einerseits darf nicht jedes Werkzeug auf jedem Platz abgelegt werden. So gibt es in manchen Magazinen spezielle zulässige Plätze für die Eigenschaft "schwer" der Werkzeuge oder die Eigenschaft "besonders lang" der Werkzeuge. Die Menge der Magazinplätze, auf denen ein konkretes Werkzeug platziert werden kann, werden als für das Werkzeug zulässige Magazinplätze bezeichnet. Die zulässigen Magazinplätze für ein Werkzeug sind nicht alle gleich gut geeignet. Daher kann für ein Werkzeug eine Teilmenge der zulässigen Plätze als bevorzugte Plätze ausgezeichnet werden. Zusätzlich zu diesen Restriktionen entstehen noch Restriktionen durch den Platzbedarf der Werkzeuge im Magazin. Werkzeuge können auf Grund ihrer Größe über den Bereich eines Magazinplatzes hinausragen. Dadurch kann es zu Einschränkungen für Plätze am Magazinrand oder durch andere Werkzeuge im Magazin kommen.
Zudem können zweckmäßigerweise folgende Eingabeparameter hinzukommen:

Die Menge der mit einem festen Magazinplatz versehenen Werkzeuge.

Die Menge der auf einem festen Platz einzufügenden Werkzeuge mit ihren Magazinplätzen.

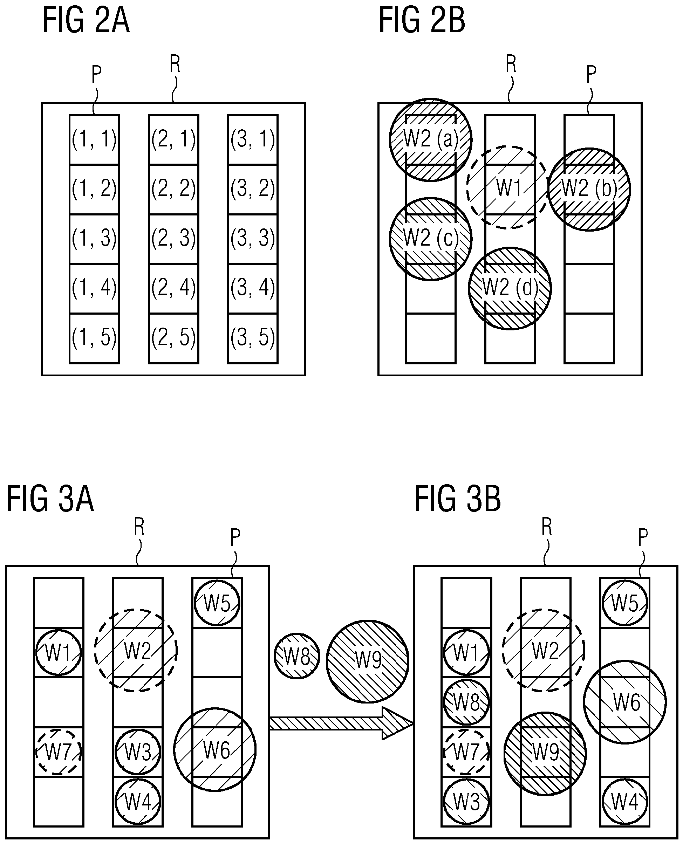

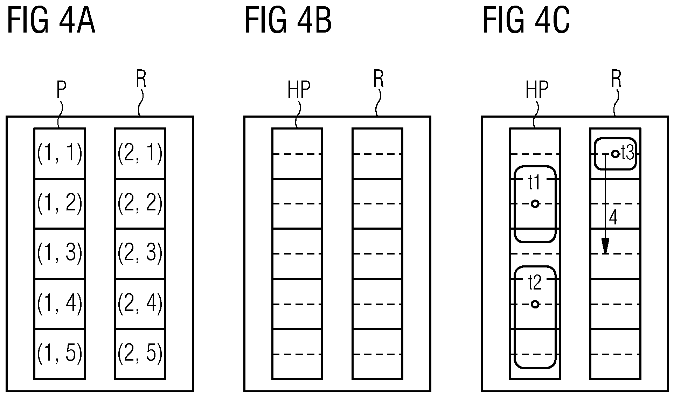

In Figur 2A zeigt ein vereinfachtes Regalmagazin R, mit Magazinplätzen P, wobei diese mit (1,1) bis (1,5) für die erste Spalte, mit (2,1) bis (2,5) für die zweite und mit (3,1) bis (3,5) beispielhaft für die dritte Spalte indiziert sind.
Somit ist im Beispiel ein Regalmagazin mit 15 Magazinplätzen abgebildet, angeordnet in drei Magazinspalten und fünf Magazinzeilen. In Figur 2A und Figur 4A ist die Indizierung abgebildet. So bezeichnet z.B. (2,3) den Magazinplatz in der zweiten Spalte und dritten Zeile. In Figur 2B sind zulässige und unzulässige Magazinplatzzuordnungen abgebildet. In den Figuren 2B, 3A, 3B sind Werkzeuge mit W1 bis W9 bezeichnet. Ausgangspunkt ist in Figur 2B ein mit einem Werkzeug W1, befülltes Magazin. W1 ist in seinen Platzbedarf z.B. dem Werkzeugradius als Kreis dargestellt. Zusätzlich soll Werkzeug W2 zum Magazin hinzugefügt werden. W2 mit (c) und W2 mit (d) markiert, sind zulässige und W2 mit (a) und W2 mit (b) markiert, sind unzulässige Plätze. Der Platz (1,1) ist nicht zulässig, da W2(a) dort mit dem Magazinrand kollidiert. Der Platz (3,2) ist ebenfalls nicht zulässig, da W2(b) dort mit den Werkzeugen W1 kollidiert. Zulässig sind z.B. die Plätze (1,3) und (2,4), da W2(c) bzw. W2(d) dort weder mit dem Rand noch mit W1 kollidieren würde.
In Figur 3A und 3B ist exemplarisch eine konkrete Situation einschließlich einer zulässigen Platzzuordnung dargestellt. In Figur 3a ist die Ausgangssituation abgebildet, ein mit sieben Werkzeugen W1 bis W7 bestücktes Magazin. Die Werkzeuge W2 und W7, mit gestricheltem Kreis dürfen nicht einem neuen Platz zugewiesen werden. Demnach verbleiben diese jeweils auf einem festen Platz. Alle anderen Werkzeuge können umplatziert werden. In dieses Magazin sollen zwei weitere Werkzeuge W8 und W9 eingefügt werden. Auf Grund seines Platzbedarfs kann W9 nicht auf einen oberen oder unteren Randplatz (1,1), (2,1), (3,1), (1,5), (2,5), (3,5) abgelegt werden. Darüber hinaus kann W9 nicht auf den Plätzen (1,3), (2,3), (3,2) abgelegt werden, da es dort mit den nicht verrückbaren Werkzeugen W2 bzw. W7 kollidieren würde. W8 hingegen kann nur nicht auf den Plätzen (2,1) und (2,3) abgelegt werden, da es dort mit W2 kollidieren würde.
In Figur 3B ist eine zulässige Platzzuordnung abgebildet. Drei im Magazin befindliche Werkzeuge wurden umplatziert, welche gestreift dargestellt sind, und die beiden neuen Werkzeuge W8 und W9 wurden eingefügt. Die drei Werkzeuge W3, W4 und W6 wurden umplatziert, um Platz für das Werkzeug W9 zu schaffen.
Das beschriebene Problem kann in zwei Stufen gelöst werden. In der ersten Stufe, Vorverarbeitung, wird das Problem in ein äquivalentes, vereinfachtes Problem transformiert, so dass keine Platzrestriktionen durch den Magazinrand mehr zu berücksichtigen sind. In der zweiten Stufe wird das vereinfachte Problem als ganzzahliges lineares Programm (MILP) formuliert und mit Hilfe eines geeigneten Solvers gelöst. Im Erfolgsfall wird eine zulässige Platzzuordnung bestimmt, bei der die minimal mögliche Menge an im Magazin befindlichen Werkzeugen einen neuen Platz zugewiesen wird. Im Misserfolgsfall existiert keine zulässige Platzzuordnung für alle hinzuzufügenden Werkzeuge
Im obigen Beispiel wurden zwei Arten von Platzrestriktionen beschrieben. Zum einen Kollisionen mit dem Magazinrand und zum anderen Kollisionen zwischen Werkzeugen im Magazin. Die erste Art von Restriktionen, Magazinrand, hängt nur vom Werkzeug und dem gewählten Platz ab. D.h., diese Art von Restriktionen können äquivalent durch Platzzulässigkeit berücksichtigt werden. Die Vorverarbeitung löscht aus der Menge der für ein Werkzeug zulässigen Plätze alle Plätze, an denen es zu Kollisionen mit dem Magazinrand kommt. Nach der Vorverarbeitung kann somit jedes Werkzeug in einem leeren Magazin auf jeden für das Werkzeug zulässigen Platz abgelegt werden.

In der MILP-Formulierung gelten die folgenden Bezeichnungen:

Indizes:

$L$ — Menge aller Magazinplätze
$T$ — Menge aller Werkzeuge
$T_N$ — Menge aller einzufügenden Werkzeuge
$T_O$ — Menge aller im Magazin vorhandenen Werkzeuge
$T_F$ — Menge aller auf einen festen Platz fixierten Werkzeuge, $T_F \subset T_N \cup T_O$.
$L_t$ — Menge aller zulässigen Plätze für Werkzeug t

Parameter

$l_t$ — Der feste Platz von Werkzeug $t \in T_F$.
$l_t$ — Der ursprüngliche Platz von Werkzeug $t \in T_O$.

$\mathrm{cov}_{l,\tilde{l}}^{t}$ — Überdeckter Anteil des Zwischenraums zwischen den Plätzen $l$ und $\tilde{l}$, wenn Werkzeug t auf Platz 1 liegt, $0 \leq \mathrm{cov}_{l,\tilde{l}}^{t} \leq 1$.

Variablen:

$\mathrm{setup}_{t,l}$ — Platzzuordnung von Werkzeug t zu Platz $l$. (Wert 1 wenn das Werkzeug dem Platz zugewiesen wird und 0 sonst.)

Mit dieser Notation kann die Problemstellung als folgendes ganzzahliges lineares Programm formuliert werden. Zu minimieren ist die Anzahl der nicht mehr auf ihrem ursprünglichen Platz befindlichen Werkzeuge.

Minimierungsfunktion:

$$\sum_{t \in T_O} 1 - \mathrm{setup}_{t,l_t}$$

Nebenbedingungen:

(1) Jedes Werkzeug muss einen Magazinplatz zugewiesen bekommen.

$$\sum_{l \in L} \mathrm{setup}_{t,l} = 1, \qquad t \in T$$

(2) Kein Magazinplatz darf mehrfach zugewiesen werden.

$$\sum_{t \in T} \mathrm{setup}_{t,l} \leq 1, \qquad l \in L$$

(3) Nur zulässige Magazinplätze dürfen zugewiesen werden

$$\sum_{l \in L \setminus L_t} \text{setup}_{t,l} = 0, \qquad t \in T$$

(4) Fixierte Werkzeuge müssen ihrem festen Platz zugewiesen werden.

$$\text{setup}_{t,l_t} = 1, \qquad t \in T_F$$

(5) Von einem Werkzeug überdeckte Plätze dürfen nicht von Werkzeugen belegt sein und zwei Werkzeuge dürfen nicht kollidieren.

$$\sum_{t \in T} \text{cov}_{l_1,l_2}^t \cdot \text{setup}_{t,l_1} + \sum_{t \in T} \text{cov}_{l_2,l_1}^t \cdot \text{setup}_{t,l_2} \leq 1, \qquad l_1, l_2 \in L, l_1 \neq l_2$$

Durch diese Ungleichungen wird sichergestellt, dass zwei Werkzeuge auf einem zulässigen Magazinplatzpaar platziert sind. Erfasste bzw. ermittelte zulässige Magazinplatzpaare garantieren deren kollisionsfreie Belegung mit Werkzeugen bezüglich ihres jeweiligen Platzbedarfs.

Dieses ganzzahlige Programm hat genau dann eine Lösung, wenn es eine zulässige Platzzuordnung der Werkzeuge im Magazin gibt, bei der den fixierten Werkzeugen jeweils ihr fester Platz zugeordnet wird.

Die zuletzt genannte Gruppe von Restriktionen (5), zur Berücksichtigung der Platzbedarfe der Werkzeuge umfassen viele überflüssige Ungleichungen. Für viele Magazinplatzpaare $l_1, l_2 \in L, l_1 \neq l_2$ sind diese Ungleichungen immer erfüllt, weil die beiden Magazinplätze des Magazinplatzpaares sehr weit auseinander liegen. Es ist sinnvoll, Magazinplatzpaare zu betrachten, bei denen es ein Werkzeugpaar gibt, welches auf diesen Magazinplätzen abgelegt werden kann und kollidiert. Gibt es ein solches Werkzeugpaar nicht, so haben die Ungleichungen keinen einschränkenden Charakter und können weggelassen werden.

Lösungen des obigen mathematischen Programms können viele unerwünschte kleine Leerstellen bzw. freier Zwischenraum zwischen den platzierten Werkzeugen enthalten. Insbesondere wenn das Magazin noch nicht sehr voll ist, können die Werkzeuge an vielen verschiedenen Stellen abgelegt werden. Beim späteren Hinzufügen weiterer Werkzeuge zum Magazin können die vorhandenen Leerstellen zu klein für die neuen Werkzeuge sein und ein Umplatzieren der sich schon im Magazin befindlichen Werkzeuge erzwingen. Daher ist es vorteilhaft, schon von Beginn an die Magazinbelegung so zu gestalten, dass nach Möglichkeit kleine freie Zwischenräume zwischen Werkzeugen vermieden werden. Um kompakte Magazinbelegungen als Lösung zu erhalten, kann das obige mathematische Programm erweitert werden.

Variablen:

$b_{l_1,l_2}$  Gleichzeitige Belegung beider Plätze $l_1$ und $l_2$ durch Werkzeuge, so dass keine/geringe Leerstelle (ein möglichst geringe Größes des Zwischenraums bzw. kein Zwischenraum) zwischen den Werkzeugen verbleibt. (Wert 1 wenn beide Plätze ohne Leerstelle belegt sind und 0 sonst.).

Nebenbedingungen:

(6) Erkennen von Leerstellen zwischen Werkzeugen.

$$\sum_{t \in T} \text{cov}_{l_1,l_2}^t \cdot \text{setup}_{t,l_1} + \sum_{t \in T} \text{cov}_{l_2,l_1}^t \cdot \text{setup}_{t,l_2} \geq \alpha \cdot b_{l_1,l_2}, \qquad l_1, l_2 \in L, l_1 \neq l_2$$

Der linke Teil des Terms (6) kann auf Grund der obigen Nebenbedingungen (5) höchstens 1 sein. Wird als $\alpha$ eine geeignete Zahl kleiner gleich 1 gewählt, so kann $b_{l_1,l_2}$ nur den Wert 1 annehmen, wenn mindestens ein Anteil von $\alpha$ des Platzes zwischen den Positionen $l_1, l_2$ durch die dort platzierten Werkzeuge überdeckt wird. D.h., die Variablen $b_{l_1,l_2}$ zählen die Anzahl an Werkzeugen, die sehr nah zusammen platziert sind. Mit folgender Zielfunktion

$$\sum_{l_1,l_2 \,\in\, L, l_1 \neq l_2} b_{l_1,l_2}$$

werden die Werkzeuge in einer optimalen Lösung immer möglichst nah bzw. benachbart neben einem anderen Werkzeug platziert sein.

Die Steuerungen von Werkzeugmaschinen bieten unterschiedliche Arten der Verwaltung von Regalmagazinen. Eine z.B. in Sinumerik-Steuerungen mögliche Art ist das Halbplatzmodell. Ein Halbplatz ist eine Sonderform eines Teilplatzes. Das Teilplatzmodell ermöglicht die teilweise Belegung eines Magazinplatzes durch ein Werkzeug. Der Übersichtlichkeit wegen wird im Folgenden ein Magazin, das beispielsweise in Figur 4A gezeigt wird, betrachtet, in welchem die Spalten unabhängig sind. D.h., es werden im Beispiel nur Halbplätze nach oben und unten berücksichtigt. In Figur 4b ist ein Magazin R mit zwei Spalten und fünf Zeilen schematisch dargestellt. In Figur 4A sind die Plätze indiziert und in der Figur 4B ist die Aufteilung in Halbplätze HP dargestellt. Figur 4C zeigt eine kollisionsfreie Belegung mit drei Werkzeugen t1, t2 und t3 auf den Plätzen (1,2), (1,4) und (2,1).

Eine Besonderheit im Halbplatzmodell ist, dass Werkzeuge nicht symmetrisch sein müssen. Werkzeug t1 beansprucht nach oben und unten jeweils zwei Halbplätze. Hingegen beansprucht Werkzeug t2 nach oben zwei Halbplätze und nach unten drei Halbplätze (vgl. Figur 4C). Beide Werkzeuge überlappen den Platz (1,3) kollidieren dort jedoch nicht, da sie jeweils nur den oberen bzw. den unteren Halbplatz überdecken.

Der Überdeckungsparameter $\mathrm{cov}_{l,\tilde{l}}^{t}$ lässt sich mit Hilfe der Größe des Zwischenraums als Quotient aus der Größe des von t überdeckten Zwischenraums und der Gesamtgröße des Zwischenraums bestimmen. Als Sonderform mit Halbplätzen entspricht dieser Überdeckungsparameter dem Quotienten aus der Anzahl der von t überdeckten dazwischen liegenden Halbplätze und der gesamten Anzahl der dazwischen liegenden Halbplätze.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein. Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

**Patentansprüche**

1. Verfahren zur rechnergestützten Optimierung einer Belegung von Magazinplätzen (P) mit Werkzeugen innerhalb mindestens eines Werkzeugmagazins (R) für eine Werkzeugmaschine aufweisend folgende Schritte:

   a) Erfassen einer Menge von Magazinplätzen (P) in mindestens einem Werkzeugmagazin (R),
   b) Erfassen einer ersten Menge von Werkzeugen, die zumindest einen Magazinplatz belegen, sowie derer belegte Magazinplätze,
   c) Erfassen einer zweiten Menge von Werkzeugen, die zusätzlich in das zumindest eine Werkzeugmagazin aufzunehmen sind,
   d) Erfassen eines Platzbedarfs und gegebenenfalls zumindest einer weiteren Eigenschaft für jedes Werkzeug,
   e) Erfassen jeweils einer Menge von zulässigen Magazinplätzen für jedes Werkzeug, wobei ein zulässiger Magazinplatz vom Platzbedarf und/oder zumindest einer weiteren Eigenschaft des Werkzeugs und/oder einer Eigenschaft des Magazinplatzes abhängt,
   f) Erfassen einer Menge von zulässigen Magazinplatzpaaren, wobei ein erstes Werkzeug auf einen ersten für dieses Werkzeug zulässigen Magazinplatz des Magazinplatzpaares, und ein zweites Werkzeug auf den zweiten für dieses Werkzeug zulässigen Magazinplatz des Magazinplatzpaares kollisionsfrei bezüglich ihres jeweiligen Platzbedarfs platziert werden können und Erfassen der Größe des freien Zwischenraums zwischen dem ersten bereits platzierten Werkzeug und dem zweiten bereits platzierten Werkzeug, **dadurch gekennzeichnet, dass**
   g) Optimierung der Belegung der Magazinplätze mit Werkzeugen der ersten Menge und zumindest eines aufzunehmenden Werkzeuges aus der zweiten Menge mittels gemischt ganzzahliger linearer Optimierung, so dass die Anzahl der durch die Aufnahme des genannten Werkzeuges notwendigen Umplatzierungen der Werkzeuge aus der ersten Menge minimiert wird, wobei die notwendigen Umplatzierungen und Platzierungen der Werkzeuge aus der zweiten Menge so kompakt erfolgt, dass die Summe der Größen der freien Zwischenräume zweier benachbart platzierter Werkzeuge minimiert wird und das Magazinplatzpaar dieser benachbart platzierter Werkzeuge aus der Menge der für dieses Werkzeugpaar zulässigen Magazinplatzpaare ist.

2. Verfahren nach dem vorhergehenden Anspruch, **dadurch gekennzeichnet, dass** der Optimierungsschritt g) gegebenenfalls mehrfach wiederholt werden, solange bis alle Werkzeuge der zweiten Menge in das genannte Magazin aufgenommen worden sind.

3. Verfahren nach einem der vorhergehenden Ansprüche, **dadurch gekennzeichnet, dass** gemäß der optimierten Belegung die Werkzeuge von einem Magazingerät des Werkzeugmagazins aufgenommen und/oder umplatziert werden.

4. Verfahren nach einem der vorhergehenden Ansprüche, **dadurch gekennzeichnet, dass** eine Teilmenge der Werkzeuge aus der ersten Menge vorgegeben wird, die jeweils weder durch die Optimierung noch durch die Aufnahme eines Werkzeuges auf einen anderen Magazinplatz umplatziert werden dürfen.

5. Verfahren nach einem der vorhergehenden Ansprüche, **dadurch gekennzeichnet, dass** für eine Teilmenge der Werkzeuge aus der zweiten Menge zusätzlich zulässige Magazinplätze erfasst werden und die Optimierung derart durchgeführt wird, dass diese Werkzeuge auf die jeweils zulässigen erfassten Magazinplätze platziert werden.

6. Steuerungseinrichtung zur rechnergestützten Optimierung einer Belegung von Magazinplätzen (P) mit Werkzeugen innerhalb mindestens eines Werkzeugmagazins (R) für eine Werkzeugmaschine aufweisend:

   a) eine erste Erfassungseinheit, die dazu ausgelegt ist, eine Menge von Magazinplätzen (P) in mindestens einem Werkzeugmagazin (R) zu erfassen,
   b) eine zweite Erfassungseinheit, die dazu ausgelegt ist, eine erste Menge von Werkzeugen, die zumindest einen Magazinplatz belegen, sowie derer belegte Magazinplätze zu erfassen,
   c) eine dritte Erfassungseinheit, die dazu ausgelegt ist, eine zweite Menge von Werkzeugen, die zusätzlich in das zumindest eine Werkzeugmagazin aufzunehmen sind, zu erfassen,
   d) eine vierte Erfassungseinheit, die dazu ausgelegt ist, einen Platzbedarf für jedes Werkzeug und gegebenenfalls zumindest einer weiteren Eigenschaft für jedes Werkzeug zu erfassen,
   e) eine fünfte Erfassungseinheit, die dazu ausgelegt ist, jeweils eine Menge von zulässigen Magazinplätzen für jedes Werkzeug zu erfassen, wobei ein zulässiger Magazinplatz vom Platzbedarf und/oder zumindest einer weiteren Eigenschaft des Werkzeugs und/oder einer Eigenschaft des Magazinplatzes abhängt,
   f) eine sechste Erfassungseinheit, die dazu ausgelegt ist, die Menge von zulässigen Magazinplatzpaaren zu erfassen, wobei ein erstes Werkzeug auf einen ersten für dieses Werkzeug zulässigen Magazinplatz des Magazinplatzpaares und ein zweites Werkzeug auf den zweiten für dieses Werkzeug zulässigen Magazinplatz des Magazinplatzpaares kollisionsfrei bezüglich ihres jeweiligen Platzbedarfs platziert werden können und und die Größe des freien Zwischenraums zwischen dem ersten bereits platzierten Werkzeug und dem zweiten bereits platzierten Werkzeug zu erfassen, **dadurch gekennzeichnet, dass**

g) eine Optimierungseinheit, die dazu ausgelegt ist, die Belegung der Magazinplätze mit Werkzeugen der ersten Menge und zumindest eines aufzunehmenden Werkzeuges aus der zweiten Menge mittels gemischt ganzzahliger linearer Optimierung zu optimieren, so dass die Anzahl der durch die Aufnahme des genannten Werkzeuges notwendigen Umplatzierungen der Werkzeuge aus der ersten Menge minimiert wird, wobei die notwendigen Umplatzierungen und Platzierungen der Werkzeuge aus der zweiten Menge so kompakt erfolgt, dass die Summe der Größen der freien Zwischenräume zweier benachbart platzierter Werkzeuge minimiert wird und das Magazinplatzpaar dieser benachbart platzierter Werkzeuge aus der Menge der für dieses Werkzeugpaar zulässigen Magazinplatzpaare ist.

**7.** Steuerungseinrichtung nach Anspruch 6, **dadurch gekennzeichnet, dass** eine Teilmenge der Werkzeuge aus der ersten Mengen vorgegeben ist, die jeweils weder durch die Optimierung noch durch die Aufnahme eines Werkzeuges auf einen anderen Magazinplatz umplatziert werden dürfen.

**8.** Computerprogrammprodukt mit Programmcodemitteln zur Durchführung des Verfahrens nach einem der vorangehenden Verfahrensansprüche, wenn es auf einer Steuerungseinrichtung nach einem der vorangehenden Steuerungseinrichtungsansprüche abläuft oder auf einem computerlesbaren Medium gespeichert ist.

**Claims**

**1.** Method for the computer-aided optimization of the occupancy of magazine spaces (P) with tools within at least one tool magazine (R) for a machine tool, comprising the following steps:

a) acquiring a set of magazine spaces (P) in at least one tool magazine (R),
b) acquiring a first set of tools that occupy at least one magazine space, and their occupied magazine spaces,
c) acquiring a second set of tools that are additionally to be received in the at least one tool magazine,
d) acquiring a space requirement and possibly at least one further property for each tool,
e) acquiring a respective set of permissible magazine spaces for each tool, wherein a permissible magazine space depends on the space requirement and/or at least one further property of the tool and/or a property of the magazine space,
f) acquiring a set of permissible magazine space pairs, wherein a first tool is able to be placed in a first magazine space of the magazine space pair that is permissible for this tool, and a second tool is able to be placed in the second magazine space of the magazine space pair that is permissible for this tool, without any collision in terms of their respective space requirement, and acquiring the size of the free gap between the first already placed tool and the second already placed tool, **characterized in that**
g) optimizing the occupancy of the magazine spaces with tools of the first set and at least one tool to be received from the second set by way of mixed integer linear optimization, such that the number of relocations of the tools from the first set required due to the reception of said tool is minimized, wherein the required relocations and placements of the tools from the second set is performed in a compact manner such that the sum of the sizes of the free gaps between two adjacently placed tools is minimized and the magazine space pair of these adjacently placed tools is from the set of magazine space pairs permissible for this tool pair.

**2.** Method according to the preceding claim, **characterized in that** the optimization step g) is possibly repeated multiple times until all of the tools of the second set have been received in said magazine.

**3.** Method according to either of the preceding claims, **characterized in that** the tools are picked up and/or relocated by a magazine device of the tool magazine in accordance with the optimized occupancy.

**4.** Method according to one of the preceding claims, **characterized in that** a subset of the tools from the first set that are not allowed to be relocated in each case either by the optimization or by the reception of a tool in another magazine space is predefined.

**5.** Method according to one of the preceding claims, **characterized in that**, for a subset of the tools from the second set, additionally permissible magazine spaces are acquired and the optimization is performed such that these tools are placed in the respectively permissible acquired magazine spaces.

6. Control apparatus for the computer-aided optimization of the occupancy of magazine spaces (P) with tools within at least one tool magazine (R) for a machine tool, having:

a) a first acquisition unit that is designed to acquire a set of magazine spaces (P) in at least one tool magazine (R),
b) a second acquisition unit that is designed to acquire a first set of tools that occupy at least one magazine space, and their occupied magazine spaces,
c) a third acquisition unit that is designed to acquire a second set of tools that are additionally to be received in the at least one tool magazine,
d) a fourth acquisition unit that is designed to acquire a space requirement for each tool and possibly at least one further property for each tool,
e) a fifth acquisition unit that is designed to acquire a respective set of permissible magazine spaces for each tool, wherein a permissible magazine space depends on the space requirement and/or at least one further property of the tool and/or a property of the magazine space,
f) a sixth acquisition unit that is designed to acquire the set of permissible magazine space pairs, wherein a first tool is able to be placed in a first magazine space of the magazine space pair that is permissible for this tool, and a second tool is able to be placed in the second magazine space of the magazine space pair that is permissible for this tool, without any collision in terms of their respective space requirement, and and to acquire the size of the free gap between the first already placed tool and the second already placed tool, **characterized in that**
g) an optimization unit that is designed to optimize the occupancy of the magazine spaces with tools of the first set and at least one tool to be received from the second set by way of mixed integer linear optimization, such that the number of relocations of the tools from the first set required due to the reception of said tool is minimized, wherein the required relocations and placements of the tools from the second set is performed in a compact manner such that the sum of the sizes of the free gaps between two adjacently placed tools is minimized and the magazine space pair of these adjacently placed tools is from the set of magazine space pairs permissible for this tool pair.

7. Control apparatus according to Claim 6, **characterized in that** a subset of the tools from the first set that are not allowed to be relocated in each case either by the optimization or by the reception of a tool in another magazine space is predefined.

8. Computer program product containing program code means for performing the method according to one of the preceding method claims when it runs on a control apparatus according to one of the preceding control apparatus claims or is stored on a computer-readable medium.

**Revendications**

1. Procédé d'optimisation assistée par ordinateur d'une occupation d'emplacements de magasin (P) par des outils à l'intérieur d'au moins un magasin d'outils (R) pour une machine-outil, comprenant les étapes suivantes :

a) la détection d'un ensemble d'emplacements de magasin (P) dans au moins un magasin d'outils (R) ;
b) la détection d'un premier ensemble d'outils qui occupent au moins un emplacement dans le magasin, ainsi que leurs emplacements de magasin occupés ;
c) la détection d'un second ensemble d'outils qui doivent être reçus en plus dans au moins un magasin d'outils ;
d) la détection d'un besoin en emplacements et, le cas échéant, d'au moins une autre caractéristique pour chaque outil ;
e) la détection respectivement d'un ensemble d'emplacements de magasin autorisés pour chaque outil, un emplacement de magasin autorisé dépendant de l'espace du besoin en emplacements et/ou d'au moins une autre caractéristique de l'outil et/ou d'une caractéristique de l'emplacement de magasin ;
f) la détection d'un ensemble de paires d'emplacements de magasin autorisées, dans laquelle un premier outil pouvant être placé sur un premier emplacement de magasin autorisé pour cet outil de la paire d'emplacements de magasin, et un second outil pouvant être placé sur le second emplacement de magasin autorisé pour cet outil de la paire d'emplacements de magasin sans collision relativement à leurs besoins respectifs en emplacements, et la détection de la taille de l'espace intermédiaire libre entre le premier outil déjà placé et le second outil déjà placé, **caractérisé en ce que**

g) l'optimisation de l'occupation des emplacements de magasin par des outils du premier ensemble et au moins un outil à recevoir du second ensemble au moyen d'une optimisation linéaire en nombre entier mixte, de sorte que le nombre des changements de placement des outils du premier ensemble nécessaires par l'insertion dudit outil est minimisé, les changements de placement nécessaires et les placements des outils du second ensemble étant effectués d'une manière si compacte de telle sorte que la somme des grandeurs des espaces libres de deux outils placés l'un à côté de l'autre est minimisée et que la paire d'emplacements de magasin de ces outils placés l'un à côté de l'autre de l'ensemble des paires d'emplacements de magasin autorisées pour cette paire d'outils.

2. Procédé selon la revendication précédente, **caractérisé en ce que** l'étape d'optimisation g) peut être répétée plusieurs fois jusqu'à ce que tous les outils de la seconde quantité aient été inclus dans ledit magasin.

3. Procédé selon l'une quelconque des revendications précédentes, **caractérisé en ce que**, selon l'affectation optimisée, les outils sont reçus et/ou déplacés par un appareil de magasin du magasin d'outils.

4. Procédé selon l'une quelconque des revendications précédentes, **caractérisé en ce qu'**un sous-ensemble des outils du premier ensemble est prédéfini, lesquels ne peuvent être déplacés ni par l'optimisation ni par le logement d'un outil vers un autre emplacement de magasin.

5. Procédé selon l'une des revendications précédentes, **caractérisé en ce que** pour un sous-ensemble des outils du second ensemble, des emplacements de magasin supplémentaires autorisés sont détectés et l'optimisation est réalisée de telle sorte que ces outils sont placés sur les emplacements de magasin respectivement autorisés détectés.

6. Dispositif de commande pour l'optimisation assistée par ordinateur d'une occupation de postes de magasin (P) avec des outils à l'intérieur d'au moins un magasin d'outils (R) pour une machine-outil, comprenant :

a) une première unité de détection conçue afin de détecter une quantité d'emplacements de magasin (P) dans au moins un magasin d'outils (R) ;
b) une seconde unité de détection conçue afin de détecter une première série d'outils qui occupent au moins un emplacement de magasin ainsi que les emplacements de magasin occupés par ceux-ci ;
c) une troisième unité de détection qui est conçue afin de détecter un second ensemble d'outils à ajouter à au moins un magasin d'outils ;
d) une quatrième unité de détection conçue afin de détecter un encombrement pour chaque outil et, le cas échéant, au moins une autre caractéristique pour chaque outil ;
e) une cinquième unité de détection, qui est conçue afin de détecter respectivement une quantité d'emplacements de magasin autorisés pour chaque outil, un emplacement de magasin autorisé dépendant de l'espace requis et/ou d'au moins une autre propriété de l'outil et/ou une propriété de l'emplacement de magasin ;
f) une sixième unité de détection, qui est conçue afin de détecter la quantité de paires d'emplacements de magasin autorisées, dans laquelle un premier outil pouvant être placé sur un premier emplacement de magasin autorisé pour cet outil de la paire d'emplacements de magasin et un deuxième outil pouvant être placé sur le deuxième emplacement de magasin autorisé pour cet outil de la paire d'emplacements de magasin sans collision par rapport à leurs besoins respectifs en emplacements, et afin de détecter la taille de l'espace intermédiaire libre entre le premier outil déjà placé et le deuxième outil déjà placé, **caractérisée en ce que**
g) une unité d'optimisation conçue afin d'optimiser l'occupation des emplacements de magasin par des outils du premier ensemble et d'au moins un outil à recevoir du second ensemble au moyen d'une optimisation linéaire en nombre entier mixte, de telle sorte que le nombre de changements de placement des outils du premier ensemble requis par l'insertion dudit outil est minimisé, les changements de placement nécessaires et les placements des outils de la seconde quantité nécessaires étant effectués d'une manière si compacte que la somme des tailles des espaces intermédiaires libres de deux outils placés l'un à côté de l'autre est minimisée et est la paire d'emplacements de magasin de ces outils placés l'un à côté de l'autre est de l'ensemble des paires d'emplacements de magasin autorisés pour cette paire d'outils.

7. Dispositif de commande selon la revendication 6, **caractérisé en ce qu'**un sous-ensemble des outils du premier ensemble est prédéterminé, qui ne peuvent être déplacés vers un autre emplacement de magasin ni par l'optimisation ni par le logement d'un outil.

8. Produit de programme informatique comprenant des moyens de code de programme pour la mise en oeuvre du procédé selon l'une des revendications de procédé précédentes, lorsqu'il est exécuté sur un dispositif de commande selon l'une des revendications de dispositif de commande précédentes ou lorsqu'il est stocké sur un support lisible par ordinateur.

# FIG 1
Stand der Technik

FIG 2A

FIG 2B

FIG 3A

FIG 3B

FIG 4A

FIG 4B

FIG 4C

P    R

$(1, 1)$   $(2, 1)$
$(1, 2)$   $(2, 2)$
$(1, 3)$   $(2, 3)$
$(1, 4)$   $(2, 4)$
$(1, 5)$   $(2, 5)$

HP    R

HP    R

t3

t1

4

t2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100204028 A1
- US 2018088562 A1
- US 2014371042 A1

**In der Beschreibung aufgeführte Nicht-Patentliteratur**

- **M. MENDES et al.** A mixed-integer linear programming model for part mix, tool allocation, and process plan selection in CNC machining centres. *International Journal of Machine Tools and Manufacture,* 01. September 2003, vol. 43 (11), ISSN 0890-6955, 1179-1184